# EUROPÄISCHE PATENTSCHRIFT

(11) **EP 2 875 582 B1**
(45) Veröffentlichungstag und Bekanntmachung des Hinweises auf die Patenterteilung: **05.04.2017**
(21) Anmeldenummer: 13727907.1
(22) Anmeldetag: 11.06.2013
(51) Int. Cl.: H02P 29/032, H02P 29/024, H02P 29/40

(54) **VERFAHREN ZUM SCHUTZ EINES ELEKTROMOTORS VOR ÜBERLASTUNG**
METHOD FOR PROTECTING AN ELECTRIC MOTOR FROM OVERLOAD
DISPOSITIF DE PROTECTION D'UN MOTEUR ÉLECTRIQUE CONTRE UNE SURCHARGE

(30) Priorität: 17.07.2012 DE 102012106410
(43) Veröffentlichungstag der Anmeldung: 27.05.2015
(73) Patentinhaber: Pierburg GmbH, 41460 Neuss (DE)
(72) Erfinder: KERKMANN, Harald, 40629 Düsseldorf (DE)
(74) Vertreter: Patentanwälte ter Smitten Eberlein Rütten Partnerschaftsgesellschaft
(86) Internationale Anmeldenummer: PCT/EP2013/061973
(87) Internationale Veröffentlichungsnummer: WO 2014/012712

(56) Entgegenhaltungen:
- DE-A1-102004 036 134

## Beschreibung

Die Erfindung betrifft ein Verfahren zum Schutz eines Elektromotors vor Überlastung, der zum Antrieb einer Stellvorrichtung dient, wobei zunächst auf einen kritischen Betriebszustand des Elektromotors geschlossen wird und bei Detektierung eines kritischen Betriebszustandes Maßnahmen zum Schutz des Elektromotors ergriffen werden.

Stellvorrichtungen im Kraftfahrzeugbereich werden beispielsweise zum Antrieb von Klappen oder Ventilen, insbesondere Drallklappen, Drosselklappen, Abgasklappen oder Abgasrückführventilen, verwendet. Diese Stellvorrichtungen weisen immer häufiger als Aktuatoren einen Elektromotor auf, da dieser eine genaue und schnelle Regelbarkeit besitzt. Die Ansteuerung dieser Elektromotoren erfolgt entweder direkt über die Motorsteuereinheit oder die von der Motorsteuereinheit geforderten Sollwertänderungen werden über separate Steuereinheiten an die Elektromotoren weitergegeben. Je nach Anwendung sind die Elektromotoren unterschiedlichen Anforderungen und Umgebungen ausgesetzt. Insbesondere eine besonders hohe Anzahl an Lastwechsel oder hohe Umgebungstemperaturen können zu einer Überlastung der Elektromotoren führen, wodurch die Wicklungen geschädigt werden und schließlich die Funktionalität der Stellvorrichtung nicht mehr gegeben ist.

Es sind daher verschiedene Motorschutzfunktionen bekannt geworden, durch die derartige Elektromotoren vor einer Überlastung beziehungsweise Überhitzung geschützt werden sollen.

So wird in der DE 100 40 080 A1 ein Verfahren zum Betrieben eines Stellantriebs mit Motorschutzfunktion offenbart, bei dem eine Wicklungstemperatur des Gleichstrommotors aus Motorparametern wie der Ansteuerspannung, dem Widerstand, der Umgebungstemperatur und der Motordrehzahl berechnet wird und bei erwarteter Temperaturüberschreitung die Leistungszufuhr abgeschaltet wird. Entsprechend sind Sensoren und Messeinheiten notwendig, um eine solche Schutzfunktion durchzuführen.

Des Weiteren ist aus der DE 10 2004 036 134 A1 eine Stellvorrichtung bekannt, die zum Schutz der Ankerwicklung vor thermischer Überlastung einen Motorstromsollwert in Abhängigkeit der Umgebungstemperatur begrenzt. Somit wird auch hier ein zusätzlicher Sensor sowie eine hinterlegte Kennlinie benötigt.

Eine Ansteuerschaltung mit Überlastschutz für einen elektronisch kommutierten Elektromotor ist aus der DE 10 2005 025 112 A1 bekannt. Dabei wird der integrierte Temperaturschutz der Endstufentransistoren genutzt, um eine Überlastung der Ankerwicklungen zu verhindern, indem die Verlustleistung im Fall des Blockierens zu einem großen Teil in die Endstufentransistoren verlagert wird. Ein Schutz liegt somit lediglich im Fall des Blockierens vor.

Entsprechend bestehen bei den bekannten Ausführungen die Nachteile, dass zum Motorschutz zusätzliche Sensoren notwendig sind. Die bekannten Schutzfunktionen greifen in der Regel bei vorliegender Überlastung beispielsweise durch Blockieren, ohne die Entstehung dieser Überlastung zu verhindern. Eine Schutzfunktion, die die Entstehung einer Überlastung im Normalbetrieb verhindert, ist nicht bekannt.

Es hat sich jedoch gezeigt, dass eine Überlastung auch im Normalbetrieb entstehen kann, ohne dass hohe Außentemperaturen auftreten. Es stellt sich daher die Aufgabe, ein Verfahren zum Schutz eines Elektromotors vor Überlastung bereitzustellen, der durch die übliche Ansteuerung des Elektromotors entsteht. So soll eine Überhitzung der Wicklungen vermieden werden. Dabei soll auf zusätzliche Sensoren und dergleichen verzichtet werden können.

Diese Aufgabe wird durch ein Verfahren zum Schutz eines Elektromotors vor Überlastung mit den Merkmalen des Anspruchs 1 gelöst.

Entsprechend wird, falls ein aus der Anzahl und der Größe der an eine Steuereinheit des Elektromotors gesendeten Sollwertänderungen berechneter Lastwert einen definierten maximal zulässigen Lastwert überschreitet, auf einen kritischen Betriebszustand geschlossen und daraufhin als Maßnahme zum Schutz des Elektromotors bei Überschreiten des maximal zulässigen Lastwertes eine Filterung eingeschaltet, über die die Verstellgeschwindigkeit begrenzt wird. Auf diese Weise wird bei hochfrequenten Sollwertänderungen die Verstellung so verlangsamt, dass eine Überhitzung des Elektromotors verhindert wird.

Vorzugsweise wird erst auf den kritischen Betriebszustand geschlossen, wenn der aus der Anzahl und der Größe der an die Steuereinheit des Elektromotors gesendeten Sollwertänderungen berechnete Lastwert über einen von den vorherigen Lastzuständen abhängigen Zeitraum den definierten maximal zulässigen Lastwert überschreitet. So wird verhindert, dass diese Motorschutzfunktion bereits bei kurzzeitigem und somit für den Elektromotor nicht gefährlichen Zeitraum eingeschaltet wird, sondern erst wenn die Überlastung sich über einen Zeitraum erstreckt, der tatsächlich zu einer deutlichen Erhöhung der Wicklungstemperatur führt.

Es hat sich als besonders vorteilhaft herausgestellt, wenn als Lastwert das Produkt aus einem Wert, der von der Anzahl der Sollwertänderungen in einem definierten Zeitintervall und der Summe der Größenänderungen in diesem Zeitintervall abhängig ist, dient. Entsprechend wird sowohl die Größe der Sollwertänderungen als auch deren Anzahl bei der Detektion berücksichtigt, da sowohl zu große Verstellwegänderungen als auch zu schnell aufeinanderfolgende kleine Sollwertänderungen zu einer Überlastung führen können

In einer hierzu weiterführenden Ausführungsform geht bei Berechnung des Produktes die Anzahl der Sollwertänderungen im definierten Zeitintervall quadratisch oder kubisch ein, wodurch berücksichtigt wird, dass eine hohe Frequenz an Sollwertänderungen schneller zur Überlastung des Elektromotors führt.

In einer bevorzugten Ausführung wird eine Sollwertänderung erst bei Überschreiten eines Grenzwertes als Sollwertänderung bei der Berechnung berücksichtigt. Hierdurch werden Störspitzen herausgefiltert.

Vorzugsweise erfolgt die Abfrage der Sollwertänderungen in einer vorgegebenen Taktfrequenz, da Winkeländerungen üblicherweise nicht in kürzeren Intervallen erfolgen. Entsprechend ist die Taktfrequenz beispielweise mit ca. 10 ms zu wählen. Im Übrigen haben übliche Antriebe eine Massenträgheit, die dazu führt, dass Änderungen am Sollwert nur verzögert ausgeführt werden, so dass eine Abfrage mit richtig eingestellter Taktfrequenz ausreichend ist.

In einer weiterführenden Ausführung des Verfahrens erfolgt die Berechnung des Lastwerts mit einer Frequenz, die einem Vielfachen der Taktfrequenz zur Abfrage der Sollwertänderungen entspricht. So wird sichergestellt, dass eine repräsentative Auswertung der Sollwertänderungen möglich ist, wobei die Frequenz so zu wählen ist, dass in diesem Zeitabschnitt keine den Motor schädigende Überlastung möglich ist. Ein üblicher Wert wäre die Generierung eins 1s Taktes.

Um dennoch, falls möglich, eine schnelle Verstellung über den Antrieb in Phasen ohne Überlastung sicherzustellen, wird die Filterung wieder ausgeschaltet, falls der Lastwert den maximal zulässigen Lastwert unterschreitet.

Besonders vorteilhaft ist es, wenn der Filter erst ausgeschaltet wird, wenn der Lastwert den maximal zulässigen Lastwert über einen von den vorherigen Lastzuständen abhängigen Zeitraum unterschreitet. So wird berücksichtigt, dass bei mehreren relativ kurzen vorherigen Überlastungen des Stellers schneller auf eine erneute Überlastung nach kurzzeitigem Normalbetrieb geschlossen wird. So wird eine Restwärme in der Wicklung berücksichtigt.

In einer besonders bevorzugten Ausführungsform wird zur Bestimmung des Überschreitens der von den vorherigen Lastzuständen abhängigen Zeiträume zum Einschalten oder Ausschalten des Filters ein Zähler verwendet, der bei Überschreiten des maximal zulässigen Lastwertes den Zählerstand erhöht und bei Unterschreiten des maximal zulässigen Lastwertes den Zählerstand verringert, wobei das Erreichen eines definierten maximalen Zählerstandes zum Einschalten des Filters führt und das Erreichen eines Zählerstandes von 0 zum Ausschalten des Filters führt. So werden die zeitlichen Abstände und die Länge von auftretenden Überlastungen und Normalbelastungen sinnvoll mit in den Ablauf aufgenommen.

Es hat sich dabei als vorteilhaft erwiesen, wenn der Zähler um ein Vielfaches schneller den Zählerstand erhöht als verringert. Damit wird der Tatsache Rechnung getragen, dass eine Erwärmung der Wicklungen schneller erfolgt als eine Abkühlung. Ein üblicher Faktor wäre der Faktor 3.

In Versuchen hat sich als Filter ein PT₂-Filter als bevorzugte Lösung zur Vermeidung von Überlastungen herausgestellt.

Es wird somit ein Verfahren zum Schutz eines Elektromotors vor Überlastung bereitgestellt, mit dem vor allem die im Betrieb auftretenden Überlastungen zuverlässig herausgefiltert werden können, ohne dabei den eigentlichen Betrieb der Stellvorrichtung unterbrechen zu müssen. Die dabei anzusteuernden Stellungen beispielsweise einer Klappe werden in ausreichendem Maße hergestellt. So wird eine Überlastung durch häufige angeforderte Sollwertwechsel und somit Schädigungen am Elektromotor vermieden, ohne dass zusätzliche Temperatursensoren oder ähnliches verwendet werden muss.

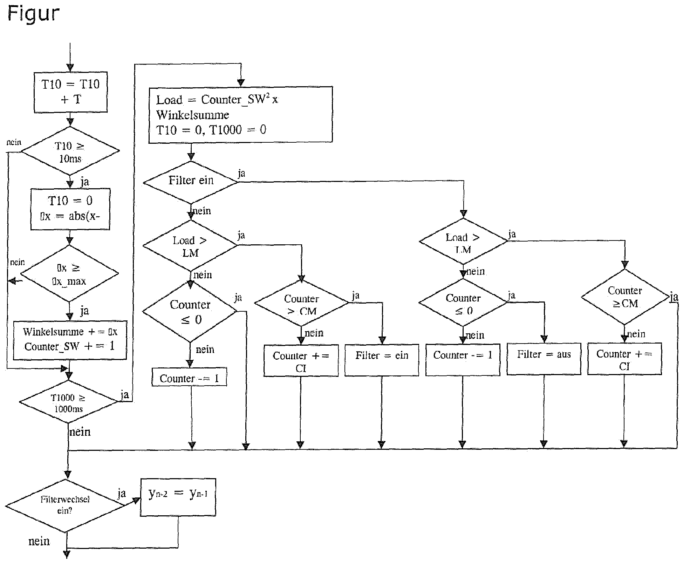

Ein Ausführungsbeispiel eines erfindungsgemäßen Verfahrens ist in der Figur als schematischer Ablaufplan dargestellt und wird nachfolgend beschrieben.

Das erfindungsgemäße Verfahren beginnt jeweils mit der Einstellung der Taktfrequenzen. Dabei werden beispielsweise in einem Takt von 2ms (T) eine Taktfrequenz von 10ms (T10) zur Abfrage der Sollwertänderung und eine Taktfrequenz von 1s (T1000) zur Berechnung eines Lastwertes erzeugt. Sind noch keine 10ms (T10) seit der letzten Abfrage vergangen wird als nächstes abgefragt, ob die Taktfrequenz 1s (T1000) vergangen ist. Ist die Antwort erneut "nein" erfolgt nichts und der Takt läuft weiter hoch. Sind die 10ms um (T10) wird der Betrag der Differenz zwischen dem bisherigen Sollwert (xalt) und dem aktuellen Sollwert (x) berechnet und der aktuelle Sollwert (x) auf (xalt) gesetzt. Sollte die berechnete Sollwertänderung (ΔX) einen vordefinierten Grenzwert (ΔX_max) unterschreiten, wird dieser nicht berücksichtigt und das Verfahren läuft mit der nächsten Abfrage weiter. Überschreitet die Sollwertänderung den Grenzwert (ΔX_max) wird diese Sollwertänderung (ΔX) zu den bereits gespeicherten Sollwertänderungen aufaddiert und so eine Winkeisumme erzeugt. Des Weiteren wird ein Zähler um 1 heraufgesetzt, also die Anzahl (Counter_SW) der Sollwertänderungen (ΔX) gezählt.

Dieser Ablauf wiederholt sich nun alle 10ms (T10) bis eine Zeit von einer Sekunde (T1000) verstrichen ist, also die Taktfrequenz zur Abfrage des Lastwertes erreicht ist. In diesem Zeitraum werden somit die Anzahl (Counter-SW) und die Größe (ΔX) der Sollwertänderungen aufaddiert.

Nach Ablauf der Taktfrequenz von 1s (T1000) wird ein Lastwert (Load) aus dem Produkt aus dem Quadrat der Anzahl der Sollwertänderungen und der Summe der Sollwertänderungsgrößen (Winkelsumme) berechnet. Gleichzeitig werden die Taktfrequenzen (T10, T1000) sowie die Anzahl der Winkeländerungen (Counter_SW) und die Summe der Sollwertänderungsgrößen (Winkelsumme) wieder auf 0 gesetzt. Entsprechend wird berücksichtigt, dass die Anzahl der Sollwertänderungen einen schädlicheren Einfluss auf die Wicklungstemperatur hat als die Größe der Sollwertänderungen.

Im Folgenden erfolgt die Abfrage, ob ein Filter bereits eingeschaltet ist. Ist dieser Filter bislang nicht eingeschaltet, wird zunächst überprüft, ob der berechnete Lastwert (Load) einen definierten maximal zulässigen Lastwert (LM) überschreitet, der durch Versuche zuvor zu ermitteln und festzulegen ist. Wird dieser maximal zulässige Lastwert (LM) nicht überschritten, wird als nächstes überprüft, ob ein Zähler (Counter) größer 0 oder kleiner beziehungsweise gleich 0 ist. Ist dieser Zähler größer als 0 wird er um 1 herabgesetzt und das Verfahren läuft ohne weitere Änderung weiter. Ist der Zähler bereits gleich oder kleiner als 0 wird ohne Änderung des Zählers das Verfahren fortgesetzt. In diesem Fall liegt keine Überlastung vor.

Ergibt sich jedoch bei dem Vergleich des Lastwertes (Load) mit dem maximal zulässigen Lastwert (LM), dass die Last zu groß ist, wird im Weiteren geprüft, ob der Zähler (Counter) einen maximal zulässigen Zählerwert (CM) überschreitet. Ist dies nicht der Fall wird der Zähler um einen Wert (CI) heraufgesetzt, der beispielsweise dem Wert 3 entspricht, so dass der Zähler mit der dreifachen Geschwindigkeit bei Lastüberschreitung heraufzählt als er bei Maximallastunterschreitung herabzählt. Wird der maximal zulässige Zählerwert (CM) tatsächlich überschritten, wird der Filter, der insbesondere ein PT₂-Filter ist, eingeschaltet, was zur Folge hat, dass die Verstellgeschwindigkeit der Stellvorrichtung deutlich reduziert wird.

Lautet das Ergebnis bei der Abfrage, ob der Filter bereits eingeschaltet ist "ja" so wird erneut der Lastwert (Load) mit dem maximal zulässigen Lastwert (LM) verglichen. Überschreitet der Lastwert (Load) erneut den maximal zulässigen Lastwert (LM) und überschreitet der Zähler (Counter) den maximal zulässigen Zählerwert (CM) bleibt der Filter eingeschaltet und es tritt keine weitere Änderung ein. Hat der Zähler (Counter) jedoch den maximal zulässigen Zählerwert (CM) noch nicht überschritten, wird der Zähler (Counter) wieder um 3 (CI) erhöht. Diese Abfrage dient dazu, dass der Zähler (Counter) bei vorheriger kurzzeitiger Unterschreitung des maximal zulässigen Zählerwertes (CM), der noch kein Ausschalten des Filters zur Folge hat, bei erneuter Überschreitung sich wieder erhöht, um ein zu frühes Ausschalten des Filters zu verhindern.

Umgekehrt wird bei eingeschaltetem Filter und einer Unterschreitung des maximal zulässigen Lastwertes (LM) der Zähler (Counter) um 1 herabgesetzt, falls er nicht bereits den Wert 0 erreicht hat. Hat der Zähler den Wert 0 bereits erreicht, wird der Filter wieder ausgestellt.

Das beschriebene Verfahren bewirkt somit, dass die Stellvorrichtung jeweils auf ihren Lastzustand überprüft wird. Ist dieser Lastzustand über einen bestimmten Zeitraum zu groß, wird die Verstellgeschwindigkeit des Elektromotors über den PT₂-Filter herabgesetzt. Ein Unterschreiten dieses Lastwertes führt ebenfalls erst mit Verzögerung zu einem Abschalten des Filters und somit zum Normalbetrieb der Stellvorrichtung. Besteht eine häufige Änderung zwischen Lastüberschreitung und Lastunterschreitung, werden diese Zustände über den jeweiligen Zählerstand gewichtet, so dass diese Gewichtung durch vorherige Versuche optimal auf tatsächliche Wicklungstemperaturänderungen eingestellt werden kann.

Somit werden Überlastungen einer Stellvorrichtung und daraus folgende Beschädigungen der Wicklungen durch zu häufige Sollwertänderungen, die dem Elektromotor beispielsweise durch ein Motorsteuergerät zur Verfügung gestellt werden, vermieden. Ein derartiger Steller kann entsprechend für viele verschiedene Motorsteuergeräte mit unterschiedlich schnellen Taktfrequenzen bei entsprechender Anpassung der Abfrage- und Maximalwerte angepasst werden, ohne andere Elektromotoren verwenden zu müssen.

Es sollte deutlich sein, dass jeweils eine Anpassung der vordefinierten Schwellwerte und Abfragefrequenzen erforderlich ist. Auch ist der Schutzbereich des vorliegenden Hauptanspruchs nicht auf das beschriebene Verfahren beschränkt. So ist es denkbar, auf verschiedene verzögernde Abfragen zu verzichten oder eine unterschiedliche Gewichtung der Anzahl und der Größe der Lastwerte vorzunehmen.

## Patentansprüche

1. Verfahren zum Schutz eines Elektromotors vor Überlastung, der zum Antrieb einer Stellvorrichtung dient, wobei zunächst auf einen kritischen Betriebszustand des Elektromotors geschlossen wird und bei Detektierung eines kritischen Betriebszustandes Maßnahmen zum Schutz des Elektromotors ergriffen werden,
**dadurch gekennzeichnet, dass**
falls ein aus der Anzahl (Counter-SW) und der Größen der an eine Steuereinheit des Elektromotors gesendeten Sollwertänderungen (ΔX) berechneter Lastwert (Load) einen definierten maximal zulässigen Lastwert (LM) überschreitet, auf einen kritischen Betriebszustand geschlossen wird und daraufhin als Maßnahme zum Schutz des Elektromotors bei Überschreiten des maximal zulässigen Lastwertes (LM) eine Filterung eingeschaltet wird, über die eine Verstellgeschwindigkeit begrenzt wird.

2. Verfahren zum Schutz eines Elektromotors vor Überlastung nach Anspruch 1,
**dadurch gekennzeichnet, dass**
erst auf den kritischen Betriebszustand geschlossen wird, wenn der aus der Anzahl (Counter-SW) und der Größe der an die Steuereinheit des Elektromotors gesendeten Sollwertänderungen (ΔX) berechnete Lastwert (Load) über einen von den vorherigen Lastzuständen abhängigen Zeitraum den definierten maximal zulässigen Lastwert (LM) überschreitet.

3. Verfahren zum Schutz eines Elektromotors vor Überlastung nach einem der vorhergehenden Ansprüche,
**dadurch gekennzeichnet, dass**
als Lastwert (Load) das Produkt aus einem Wert, der von der Anzahl (Counter-SW) der Sollwertänderungen (ΔX) in einem definierten Zeitintervall (T1000) und der Summe (Winkelsumme) der Größen der Sollwertänderungen (ΔX) in diesem Zeitintervall abhängig ist, dient.

4. Verfahren zum Schutz eines Elektromotors vor Überlastung nach Anspruch 3,
**dadurch gekennzeichnet, dass**
bei Berechnung des Produktes die Anzahl (Counter_SW) der Sollwertänderungen (ΔX) im definierten Zeitintervall (T1000) quadratisch oder kubisch eingeht.

5. Verfahren zum Schutz eines Elektromotors vor Überlastung nach einem der vorhergehenden Ansprüche,
**dadurch gekennzeichnet, dass**
eine Sollwertänderung (ΔX) erst bei Überschreiten eines Grenzwertes (Δ_xmax) als Sollwertänderung (ΔX) bei der Berechnung berücksichtigt wird.

6. Verfahren zum Schutz eines Elektromotors vor Überlastung nach einem der vorhergehenden Ansprüche,
**dadurch gekennzeichnet, dass**
die Abfrage der Sollwertänderungen (ΔX) in einer vorgegebenen Taktfrequenz (T10) erfolgt.

7. Verfahren zum Schutz eines Elektromotors vor Überlastung nach Anspruch 6,
**dadurch gekennzeichnet, dass**
die Berechnung des Lastwerts (Load) mit einer Frequenz (T1000) erfolgt, die einem Vielfachen der Taktfrequenz (T10) zur Abfrage der Sollwertänderungen (ΔX) entspricht.

8. Verfahren zum Schutz eines Elektromotors vor Überlastung nach einem der vorhergehenden Ansprüche,
**dadurch gekennzeichnet, dass**
die Filterung wieder ausgeschaltet wird, falls der berechnete Lastwert (Load) den maximal zulässigen Lastwert (LM) unterschreitet.

9. Verfahren zum Schutz eines Elektromotors vor Überlastung nach Anspruch 8,
**dadurch gekennreichnet, dass**
der Filter erst ausgeschaltet wird, wenn der berechnete Lastwert (Load) den maximal zulässigen Lastwert (LM) über einen von den vorherigen Lastzuständen abhängigen Zeitraum unterschreitet.

10. Verfahren zum Schutz eines Elektromotors vor Überlastung nach einem der vorhergehenden Ansprüche,
**dadurch gekennzeichnet, dass**
zur Bestimmung des Überschreitens der von den vorherigen Lastzuständen abhängigen Zeiträume zum Einschalten oder Ausschalten des Filters ein Zähler verwendet wird, der bei Überschreiten des maximal zulässigen Lastwertes (LM) den Zählerstand (Counter) erhöht und bei Unterschreiten des maximal zulässigen Lastwertes (LM) den Zählerstand (Counter) verringert, wobei das Erreichen eines definierten maximalen Zählerstandes (CM) zum Einschalten des Filters führt und das Erreichen eines Zählerstandes (Counter) von 0 zum Ausschalten des Filters führt.

11. Verfahren zum Schutz eines Elektromotors vor Überlastung nach Anspruch 10,
**dadurch gekennzeichnet, dass**
der Zähler um ein Vielfaches schneller den Zählerstand (Counter) erhöht als verringert.

12. Verfahren zum Schutz eines Elektromotors vor Überlastung nach einem der vorhergehenden Ansprüche,
**dadurch gekennzeichnet, dass**
als Filter ein PT₂-Filter verwendet wird.

## Claims

1. A method for protecting an electric motor from overload, said electric motor serving to drive an actuation device, wherein first a critical operating state of the electric motor is deduced and, when a critical operating state is detected, measures for protecting the electric motor are taken,
**characterized in that**,
if a load value (Load) calculated from the number (Counter-SW) and the magnitudes of the changes of the desired value (ΔX) sent to a control unit of the electric motor exceeds a defined maximum allowable load value (LM), a critical operating state is deduced and thereafter, as a measure to protect the electric motor if the maximum permissible load value (LM) is exceeded, a filtering is activated, via which an adjustment speed is limited.

2. The method for protecting an electric motor from overload according to claim 1,
**characterized in that**,
the critical operating state is deduced only if the load value (Load) calculated from the number (Counter-SW) and the magnitude of the changes of the desired value (ΔX) sent to the control unit of the electric motor exceeds the defined maximum permissible load value (LM) for a period of time depending on the previous load conditions.

3. The method for protecting an electric motor from overload according to any one of the preceding claims,
**characterized in that**,
as a load value (Load), use is made of the product of a value which is dependent on the number (Counter-SW) of the changes of the desired value (ΔX) in a defined time interval (T1000) and the sum (angular sum) of the magnitudes of the changes of the desired value (ΔX) in this time interval.

4. The method for protecting an electric motor from overload according to claim 3,
**characterized in that**
said calculation of the product is performed under inclusion, in a quadratic or cubic manner, of the number (Counter-SW) of the changes of the desired value (ΔX) in the defined time interval (T1000).

5. The method for protecting an electric motor from overload according to any one of the preceding claims,
**characterized in that**
a change of the desired value (ΔX) is considered as a change of the desired value (ΔX) in the calculation only when a limiting value (Δ_xmax) is exceeded.

6. The method for protecting an electric motor from overload according to any one of the preceding claims,
**characterized in that**
the query of the changes of the desired value (ΔX) is performed with a predetermined clock frequency (T10).

7. The method for protecting an electric motor from overload according to claim 6,
**characterized in that**
the calculation of the load value (Load) is performed with a frequency (T1000) corresponding to a multiple of the clock frequency (T10) for the query of the changes of the desired value (ΔX).

8. The method for protecting an electric motor from overload according to any one of the preceding claims,
**characterized in that**
the filtering is switched off again if the calculated load value (Load) falls below the maximum allowable load value (LM).

9. The method for protecting an electric motor from overload according to claim 8,
**characterized in that**
the filter is switched off only if the calculated load value (Load) falls below the maximum allowable load value (LM) for a time period depending on the preceding load conditions.

10. The method for protecting an electric motor from overload according to any one of the preceding claims,
**characterized in that**,
for deducing that said time periods depending on the preceding load conditions for switch-on or switch-off of the filter, are exceeded, use is made of a counter which is operative, when the maximum allowable load value (LM) is exceeded, to increase the count (Counter) and, when the maximum allowable load value (LM) is fallen below, to reduce the count (Counter), wherein, when a defined maximum count (Counter) is reached, this causes the filter to be switched on and, when a count of 0 is reached, this causes the filter to be switched off.

11. The method for protecting an electric motor from overload according to claim 10,
**characterized in that**
the counter is operative to increase the count (Counter) by a multiple faster than decreasing it.

12. The method for protecting an electric motor from overload according to any one of the preceding claims,
**characterized in that**,
as a filter, a PT₂ filter is used.

## Revendications

1. Procédé de protection d'un moteur électrique contre une surcharge, le moteur servant à entrainer un dispositif de réglage, dans lequel on conclut d'abord à un état opérationnel critique du moteur électrique et, lors d'une détection d'un état opérationnel critique, prend des mesures pour protéger le moteur électrique,
**caractérisé en ce que**,
si une valeur de charge (Load), calculée du nombre (Counter-SW) et des tailles des modifications de la consigne (ΔX) renvoyées à une unité de commande du moteur électrique, dépasse une valeur de charge (LM) maximale admissible définie, il est conclu à un état opérationnel critique et, en suite, un filtrage est enclenché comme mesure pour protéger le moteur électrique en cas de dépassement de la valeur de charge (LM) maximale admissible, filtrage par lequel une vitesse d'ajustage est limitée.

2. Procédé de protection d'un moteur électrique contre une surcharge selon la revendication 1, **caractérisé en ce qu'**il n'est conclu à l'état opérationnel critique qu'avant la valeur de charge (Load), calculée du nombre (Counter-SW) et des tailles des modifications de la consigne (ΔX) renvoyées à l'unité de commande du moteur électrique, dépasse la valeur de charge (LM) maximale admissible définie sur une période dépendant des états de charge préalables.

3. Procédé de protection d'un moteur électrique contre une surcharge selon l'une quelconque des revendications précédentes, **caractérisé en ce que** l'on utilise comme valeur de charge (LM) la produit d'une valeur dépendant du nombre (Counter-SW) des modifications de la consigne (ΔX) pendant un intervalle de temps (T1000) défini et la somme (somme angulaire) des tailles des modifications de la consigne (ΔX) dans cet intervalle de temps.

4. Procédé de protection d'un moteur électrique contre une surcharge selon la revendication 3, **caractérisé en ce que** lors du calcul de la produit, le nombre (Counter-SW) des modifications de la consigne (ΔX) pendant l'intervalle de temps (T1000) défini est inclus sous forme quadratique ou cubique.

5. Procédé de protection d'un moteur électrique contre une surcharge selon l'une quelconque des revendications précédentes, **caractérisé en ce qu'**une modification de la consigne (ΔX) n'est considérée comme modification de la consigne (ΔX) dans le calcul qu'avant le dépassement d'une valeur limite (Δ_xmax).

6. Procédé de protection d'un moteur électrique contre une surcharge selon l'une quelconque des revendications précédentes, **caractérisé en ce que** la consultation des modifications de la consigne (ΔX) est effectuée selon une fréquence d'horloge (T10) prédéterminée.

7. Procédé de protection d'un moteur électrique contre une surcharge selon la revendication 6, **caractérisé en ce que** le calcul de la valeur de charge (Load) est effectuée à une fréquence (T1000) égale à un multiple de la fréquence d'horloge (T10) utilisée pour la consultation des modifications de la consigne (ΔX).

8. Procédé de protection d'un moteur électrique contre une surcharge selon l'une quelconque des revendications précédentes, **caractérisé en ce que** le filtrage est désactivé si la valeur de charge (Load) calculée est inférieure à la valeur de charge (LM) maximale admissible.

9. Procédé de protection d'un moteur électrique contre une surcharge selon la revendication 8, **caractérisé en ce que** le filtre n'est désactivé qu'avant la valeur de charge (Load) calculée est inférieure à la valeur de charge (LM) maximale admissible pendant une période qui dépend des états de charge préalables.

10. Procédé de protection d'un moteur électrique contre une surcharge selon l'une quelconque des revendications précédentes, **caractérisé en ce que**, pour déterminer le dépassement des périodes qui dépend des états de charge préalables pour l'activation ou la désactivation du filtre, l'on utilise un compteur qui augment la valeur du compteur (Counter) lors d'un dépassement de la valeur de charge (LM) maximale admissible et réduit la valeur du compteur (Counter) lors d'un sous-dépassement de la valeur de charge (LM) maximale admissible, l'atteinte d'une valeur de compteur (CM) maximale définie causant l'activation du filtre et l'atteinte d'une valeur de compteur de 0 causant la désactivation du filtre.

11. Procédé de protection d'un moteur électrique contre une surcharge selon la revendication 10, **caractérisé en ce que** le compteur augmente la valeur du compteur (Counter) plusieurs fois plus vite qu'il la réduit.

12. Procédé de protection d'un moteur électrique contre une surcharge selon l'une quelconque des revendications précédentes, **caractérisé en ce que** l'on utilise comme filtre un filtre PT₂.
